# EUROPEAN PATENT SPECIFICATION

(11) **EP 1 625 512 B1**
(45) Date of publication and mention of the grant of the patent: **29.10.2014**
(21) Application number: 04785629.9
(22) Date of filing: 07.05.2004
(51) Int. Cl.: G06F 17/30, H04L 29/08

(54) **PEER-TO-PEER DYNAMIC WEB PAGE SHARING**
DYNAMISCHES PEER-TO-PEER-WEBSEITEN-SHARING
PARTAGE DYNAMIQUE DE PAGES WEB EN MODE D'EGAL A EGAL

(30) Priority: 22.05.2003 US 444482
(43) Date of publication of application: 15.02.2006
(73) Proprietor: Cisco Technology, Inc., San Jose, CA 95134 (US)
(72) Inventor: PRAJAPAT, Surendra, Santa Clara, CA 95054 (US); LEPORE, Michael, P., Marlborough, MA 01752-2641 (US); CLEASBY, Andrew, R., Newburyport, MA 01950-1763 (US)
(74) Representative: Kazi, Ilya
(86) International application number: PCT/US2004/014188
(87) International publication number: WO 2004/107100

(56) References cited:
- WO-A2-02/21312
- US-A1- 2002 198 941
- US-A1- 2002 198 941
- US-B1- 6 356 934
- US-B1- 6 356 934

## Description

### TECHNICAL FIELD OF THE INVENTION

This invention relates in general to communication sessions, and more particularly to peer-to-peer web page sharing.

### BACKGROUND OF THE INVENTION

A communication session frequently includes providing a user access to one or more web pages. A user may desire to share those web pages with one or more other users such that the users are viewing at least portions of the same web page. For example, in a call center environment, a user calling into the call center may desire to view the same web pages as a customer service representative or an automated attendant associated with the call center.

US 6 356 934 discloses an intermediate server for sharing data between a sender computer and receiver computer(s). A sender initiates a browsing session by (1) requesting a session setup form from the intermediate server that is returned with a beginning URL or (2) being redirected to the intermediate server. An intermediate server control program retrieves content from a server, modifies the hyperlinks within the content by appending the original URL to the URL of the intermediate server, stores the modified content data for later use, and forwards the modified content data to the sender. In asynchronous playback mode, a receiver connects to the intermediate server using a session identifier associated with sender's browsing session. An intermediate server playback program retrieves and pushes the stored content to the receiver. Storing the modified content guarantees that sender and receiver view the same content sequence as opposed to the same URL sequence. WO 02/21312 discloses a method of coordinating browsing or cobrowsing that employ an intermediate or proxy server between the clients (customer and agent) and the network, such as the Internet. This intermediate server is configured such that during cobrowsing between at least two clients, the network, such as the Internet, is accessed a single time through a single channel or "pipe" for all clients of this cobrowsing event.

### SUMMARY OF THE INVENTION

In accordance with the present invention, techniques for sharing web pages are provided.

According to a particular embodiment of the present invention, a communication system includes a first browser operable to submit requests for one or more web pages and a request to share the one or more requested web pages with another browser, the request to share specifying the other browser. The communication system also includes a web media server operable, in response to the request to share, to: (1) establish a communication session with the first browser; (2) establish a media session and a signaling session with a remote web media server, the remote web media server being associated with the other browser that the first browser specified in the request to share, the signaling session including a standard signaling protocol; (3) receive web page information from the first browser; and (4) communicate shared web page information to the remote web media server using the media session.

Particular embodiments of the present invention may provide one or more technical advantages. For example, certain embodiments may provide peer-to-peer web page sharing using multiple web media servers. This may improve efficiency in a communication system when sharing web pages. For example, in certain embodiments, processing may be split between the web media servers, which may provide better scalability. In certain embodiments, peer-to-peer dynamic web page sharing may be possible. In certain embodiments, a standard signaling protocol may be used to provide a signaling session between web media servers. In certain embodiments, this may allow one or more other devices or functions to be used that support the standard signaling protocol. For example, in certain embodiments, because a standard signaling protocol such as SIP is being used to provide peer-to-peer web page sharing, a single call may be placed using the standard signaling protocol, and multiple devices may be able to participate in the call, exchanging multiple types of media.

Other technical advantages of the present invention will be readily apparent to one skilled in the art in the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present invention and its advantages, reference is now made to the following description, taken in conjunction with the accompanying drawings, in which:
FIGURE 1 illustrates an example communication system operable to provide peer-to-peer dynamic web page sharing;
FIGURE 2 illustrates an example method for peer-to-peer dynamic web page sharing;
FIGURE 3 illustrates an example communication system operable to provide peer-to-peer simple web page sharing; and
FIGURE 4 illustrates an example communication system operable to provide peer-to-peer web page sharing using at least two phones.

### DESCRIPTION OF EXAMPLE EMBODIMENTS

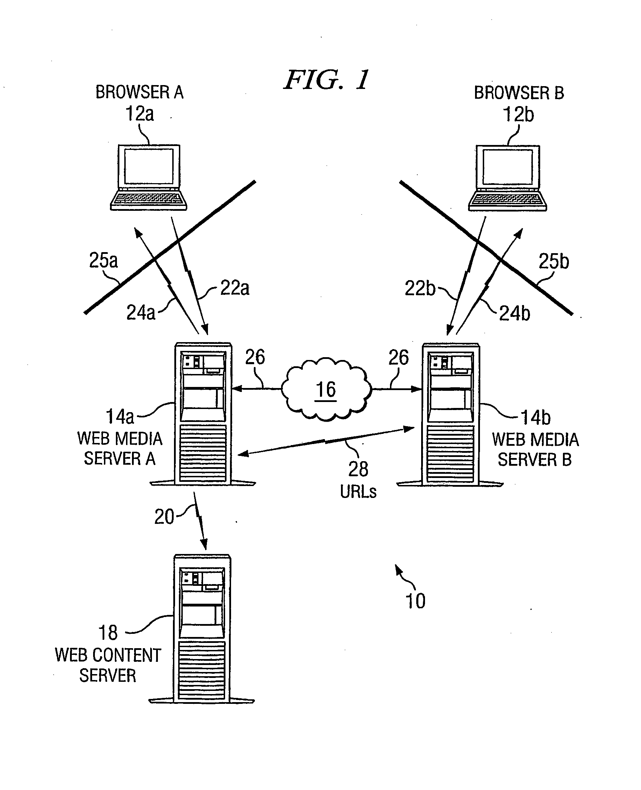

FIGURE 1 illustrates an example communication system 10 operable to provide peer-to-peer dynamic web page sharing. Communication system 10 includes browsers 12, web media servers 14a and 14b coupled via network 16, and web content server 18 coupled to web media server 14a via link 20. In general, web media servers 14 allow browser 12a to co-browse one or more web pages with browser 12b. The term "co-browse" may include one or more of the following situations: browser 12a and browser 12b display the same web pages at substantially the same time; browser 12a may alter web pages and browser 12b may view those alterations; browser 12b may alter web pages and browser 12a may view those alterations; or any other suitable situations. In one embodiment, system 10 is implemented to enable co-browsing in a call center environment such as a customer service environment. It should be understood, however, that system 10 may be implemented in any suitable environment where co-browsing may be desired.

While system 10 is illustrated as including particular elements in a specific configuration, the functionalities of these elements may be combined, separated, and/or rearranged as appropriate. Moreover, the operations of some or all of these elements may be implemented by logic encoded in media.

Browsers 12, web media servers 14, and web content server 18 may each comprise an appropriate combination of hardware and software associated with one or more computers at one or more locations. These components of system 10 may share data storage, communications, or other resources according to particular needs. For example, functionality described in connection with browser 12a, web media server 14a, and web content server 18 may be provided using a single computer system or other device, which in a particular embodiment might include a single server system. Furthermore, functionality described in connection with browsers 12, web media servers 14, and web content server 18 may be provided using any suitable software components. Each computer system may include one or more suitable input devices, output devices, mass storage media, processors, memory, or other components for receiving, processing, storing, and communicating information according to the operation of system 10. In a distributed embodiment of system 10, particular components of system 10 may be communicatively coupled to one another using one or more local area networks (LANs), metropolitan area networks (MANs), wide area networks (WANs), a global computer network such as the Internet, or any other wireline, optical, wireless, or other links.

Browsers 12 may include any suitable interface for submitting requests for and displaying media such as web pages. For example, browsers 12 may be associated with any device, application, hardware, and/or software for displaying one or more types of media. Browsers 12 may include analog, digital, or Internet protocol (IP) telephones, personal computers, video-conferencing equipment, wireless communication devices, personal digital assistants (PDAs), software applications, or any other suitable device or application. Furthermore, browsers 12 may be compatible with any suitable operating system according to particular needs. Reference to a browser 12 is meant to include reference to a user of browser 12, reference to a device including browser 12, reference to a user interface of browser 12, or any other suitable references as appropriate. A user of browser 12 may include a computer program or other suitable software for automatically communicating with one or more other users of other browsers 12.

A user associated with browser 12a may desire to view one or more web pages. The user associated with browser 12a may also desire to co-browse or share the one or more web pages or other web content with another user associated browser 12b. Although only one browser 12b is illustrated and described, the present invention contemplates browser 12a sharing web pages with any number of other browsers 12 (i.e. browser 12b, browser 12c, browser 12d, and so on). To begin a co-browsing session, the user of browser 12a may need to establish a communication session with an associated web media server 14a. For example, the user of browser 12a may click on a desktop icon associated with browser 12a to establish a communication session with web media server 14a. In another embodiment, browser 12a may already have an established communication session with web media server 14a. In certain embodiments, the communication session between browser 12a and web media server 14a includes an outgoing channel 30a and an incoming channel 32a. Outgoing channel 30a may include a hypertext transfer protocol (HTTP) channel or any other suitable type of channel. Incoming channel 32a may include a LongPoll event channel such as that described in U.S. Patent Application No. 08/352,764 entitled " " and filed with the U.S. Patent and Trademark Office, or any other suitable type of channel. For example, browser 14a may submit requests for web pages and other web content using outgoing channel 30a and web media server 14a may communicate notifications and other information to browser 14a using incoming channel 32a. In one embodiment, the communication session between browser 12a and web media server 14a may be established over a firewall or other security measure 25a. Outgoing channels 30 and incoming channels 32 may not necessarily include "always on" links. For example, in certain embodiments, outgoing channels 30 and incoming channels 32 are established for intermittent communications such as packets.

In a request to co-browse or otherwise, browser 12a may specify one or more names or other identifiers of other browsers 12 with which browser 12a desires to co-browse. For example, a user of browser 12a may submit a request to co-browse with chachi@happydaycompany.com who is associated with browser 12b. Browser 12a may also submit requests for one or more web pages, for example by requesting a particular web site, to web media server 14a. The request for a web page may specify the web page to retrieve and display, as well as any other suitable information. For example, the request for the web page may include information that may be required to properly render the web page on browser 12a, such as session information, cookies, parameters to send to web content server 18, and any other suitable information.

Web media servers 14 may include any server, processor, computer, or other suitable component for communicating with browsers 12 and for communicating with each other. Web media servers 14 may communicate with other web media servers using network 16. In a particular embodiment, web media servers 14 are equipped to negotiate communication sessions with other web media servers 14 using session initiated protocol (SIP) or any other suitable standard signaling protocol. For example, web media servers 14 may be equipped to use a network 16 that includes a preexisting SIP network. Although web media servers 14 may use any suitable standard signaling protocol to perform their associated functionalities, this description focuses on an embodiment in which web media servers 14 are SIP-enabled endpoints and communicate using a preexisting SIP network 16. It should be understood, however, that any suitable standard signaling protocol such as media gateway control protocol (MGCP) or H.323 may be used without departing from the scope of the present invention.

In response to a request to co-browse from browser 12a, web media server 14a may participate in the establishment of the communication session between web media server 14a and browser 12a. For example, web media server 14a may participate in the establishment of outgoing channel 30a and incoming channel 32a with browser 12a. Web media server 14a may be operable to receive one or more names or other identifiers of other browsers 12 with which browser 12a desires to co-browse. For example, browser 12a may request to co-browse one or more web pages with browser 12b. Web media server 14a may locate the web media server 14b associated with browser 12b. This may be done in any suitable manner. In one embodiment in which web media servers 14 are SIP endpoints, web media server 14a may locate web media server 14b using presence functionality of SIP network 16 such as SIP softswitch, for example. In one embodiment, web media servers 14 are already registered with SIP network 16. Web media server 14a may establish a signaling session 26 with web media server 14b using network 16. In an embodiment in which network 16 is a SIP network, signaling session 26 may be a SIP signaling session. In one embodiment, once web media servers 14 have found each other using network 16, the established signaling session 26 is a direct connection between web media servers 14.

Web media server 14a may also establish a media session 28 with web media server 14b using any suitable means. Media session 28 may allow web media servers 14 to communicate one or more types of media between each other. For example, media session 28 may allow web media servers 14 to communicate one or more web pages between each other. In one embodiment, media session 28 includes a direct connection between web media servers 14. It should be understood that any suitable media protocol such as Real-time Transport Protocol (RTP), transport control protocol (TCP), or user datagram protocol (UDP) may be used to provide media session 28.

A communication session between web media server 14b and browser 12b may be established in any suitable manner. In one embodiment, web media server 14b contacts browser 12b to establish the communication session. In another embodiment, a communication session between web media server 14b and browser 12b already exists. In another embodiment (as will be discussed below in more detail), a user of browser 12a and a user of browser 12b are engaged in a telephone conversation. In this example, the user of browser 12a may verbally tell the user of browser 12b to establish a communication session with web media server 14b. In certain embodiments, the communication session between browser 12b and web media server 14b may include an outgoing channel 30b and an incoming channel 32b. Outgoing channel 30b may include a hypertext transfer protocol (HTTP) channel or any other suitable type of channel, and incoming channel 32b may include a LongPoll event channel or any other suitable type of channel. For example, browser 14b may submit requests for web pages and other web content using outgoing channel 30b and web media server 14b may communicate notifications and other information to browser 14b using incoming channel 32b. In one embodiment, the communication session between browser 12b and web media server 14b may be established over a firewall or other security measure 25b.

Via outgoing channel 30a or in any other suitable manner, web media server 14a may receive requests from browser 12a for one or more web pages. For example, browser 12a may submit requests for one or more web pages by communicating a request to web media server 14a for a particular web site using the uniform resource locator (URL) of the web site. As discussed above, the request for a web page may specify the web page to retrieve and display, as well as any other suitable information. For example, the request for the web page may include information that may be required to properly render the web page such as session information, cookies, parameters to send to the web content server 18 associated with the requested web page, or any other suitable information. In one embodiment, web media server 14a may retrieve any suitable information from browser 12a using a signed Applet, plugin, or by other suitable means. Web media server 14a may derive any suitable information regarding browser 12a during a session with web content server 18.

Web media server 14a may locate the appropriate web content server 18 that includes the web page requested by browser 12a. For example, browser 12a may submit a web site address to web media server 14a, and web media server 14a may locate web content server 18 using the web site address.

Web content server 18 may include any suitable server or other computer for storing and communicating web pages. Web content server 18 may return a requested web page to web media server 14a. Web media server 14a may transform the returned web page into some intermediate form. In one embodiment, one or more links on the web page may be transformed into references and one or more links to images on the web page may also be transformed. The details of the transformation may depend on the syntax of the content being served. As merely an example, in an embodiment in which the retrieved web page includes HTML content, one transformation may need to be applied, while in the case of an IP phone display, another transformation may need to be applied.

Web media server 14a may transform the intermediate form of the retrieved web page into a renderable form that may be rendered by browser 12a. In one embodiment, each internal link in the renderable form may point back to a unique location on web media server 14a rather than web content server 18. Web media server 14a may send a notification to browser 12a, using incoming channel 32a for example, indicating that the requested web page has been retrieved. In one embodiment, incoming channel 32a includes a LongPoll event channel and web media server 14a sends a notification message using the LongPoll event channel to browser 12a. In one embodiment, browser 12a may automatically, and without any input from a user associated with browser 12a, retrieve the renderable form from web media server 14a. However, the present invention contemplates browser 12a retrieving the renderable form from web media server 14a in any suitable manner.

Web media server 14a may communicate the intermediate form to web media server 14b. In one embodiment, web media server 14a communicates the intermediate form to web media server 14b using media session 28. Web media server 14b may transform the intermediate form of the retrieved web page into a renderable form that may be rendered by browser 12b. In one embodiment, the renderable form generated by web media server 14b and the renderable form generated by web media server 14a are different due, in part, to possible differences in browsers 12a and 12b. In one embodiment, each internal link in the renderable form may point back to a unique location on web media server 14b rather than web content server 18. Web media server 14b may send a notification to browser 12b, using incoming channel 32b for example, indicating that the requested page has been retrieved. In one embodiment, incoming channel 32b includes a LongPoll event channel and web media server 14b sends a notification message using the LongPoll event channel to browser 12b. In one embodiment, browser 12b automatically, and without any input from a user associated with browser 12b, retrieve the renderable form from web media server 14b. However, the present invention contemplates browser 12b retrieving the renderable form from web media server 14b in any suitable manner.

Thus, in certain embodiments web media servers 14a and 14b may have the same intermediate form of the web page and browsers 12a and 12b may display the same web page. In one embodiment, web media servers 14a and 14b may communicate information about the status of all transactions between them, and possibly forward the information about the status to browsers 12. For example, browser 12a may receive a message when browser 12b finishes loading a requested web page. Web media servers 14a may also be operable to disable one or more links of the web page such that browser 12b may not be able to display those links. For example, web media server 14a may disable one or more links in the intermediate form of the web page before sending the intermediate form of the web page to web media server 14b. As merely an example, a user of browser 12a may include a caller to a customer service call center, and the user of browser 12b may include a customer service representative or an automated assistant associated with the call center. The user of browser 12b may be assisting the user of browser 12a with making a purchase on a web site. As the user associated with browser 12a (the caller to the call center) enters credit card information to complete a purchase, web media server 14a may prevent that information from being displayed by browser 12b. In certain embodiments, any web media server 14 associated with system 10 may be operable to disable one or more links of the web page such that other browser 12 (i.e. those not associated with the web browser 14 performing the disabling) may not be able to display those links.

In certain embodiments, either browser 12a or browser 12b may submit new action requests such as requests for web pages, requests to alter currently displayed web pages, or perform any other suitable actions according to particular needs. As an example, browser 12a may desire to perform a new action such as posting a form or clicking on a link within the current displayed web page. Browser 12a may contact web media server 14a based on, for example, the fact that links in the displayed web page have been transformed to references. Web media server 14a may register the new action request from browser 12a and may perform any suitable action. For example, web media server 14a may contact web content server 18 to retrieve another web page.

As another example, browser 12b may desire to perform a new action such as posting a form or clicking on a link with the current displayed web page. Browser 12b may contact web media server 12b based on, for example, the fact that links in the displayed web page have been transformed to references. Web media server 14b may receive the new action request and forward the new action request, including any appropriate data, in a message to web media server 14a. Web media server 14a may perform any appropriate action based on the forwarded message received from web media server 14b. For example, web media server 14a may contact web content server 18 to retrieve another web page. In certain embodiments, web media server 14a may reject the new action request forwarded by web media server 14b. This may be based on, for example, various business rules or other factors relevant to particular implementations of the present invention. An error message may be generated when web media server 14a rejects a new action request forwarded by web media server 14b, such as a "no-op" or other suitable message.

In certain embodiments, browsers 12 may be rendering multiple pages at the same time, using frames, iframes, or any other suitable techniques. It may be possible to represent the rendering of multiple pages at the same time as a content tree. The web media server 14 associated with each browser 12 may maintain this content tree. In one embodiment, the web media server 14 associated with each browser 12 maintains and preserves the content tree only while a given web page is being rendered. As the content tree in an associated browser 12 changes, changes to the content tree may be propagated back to the web media server 14 associated with the browser 12 to facilitate maintenance of an accurate reflection of the content tree of the browser 12. As an example, changes to the content tree in browser 12a may then be synchronized with other browsers 12 in a web page sharing session. As a content tree associated with a browser 12 is updated on the web media server 14 associated with the browser 12, multiple page load events may be generated from the web media server 14 to the browser 12 to cause full content synchronization.

In certain embodiments, web page form content, such as fields in web page forms for example, are kept in sync on web pages in browsers 12 involved in a web page sharing session by using JavaScript or other suitable events. As an example, at appropriate times when data in a web page form field changes, a JavaScript or other suitable event may be triggered to send a command to the appropriate web media server 14. If web media server 14b receives the command, for example, it may then be forwarded to web media server 14a. Web media server 14 a may then send the updated metadata to web media server 14b, and events may be generated to the browsers 12 to update the web page form content if necessary (i.e. the originating browser 12 may not need the event).

In certain embodiments, JavaScript events, such as onMouseOver events for example, may be kept in sync on the browsers 12 in a substantially similar manner. The JavaScript in the web pages rendered to browsers 12 may be modified so that in addition to performing the regular action, the respective web media server 14 may be notified. This may then be handled similarly to other events received by a web media server 14.

Particular embodiments of the present invention may provide one or more technical advantages. For example, certain embodiments provide peer-to-peer web page sharing using multiple web media servers 14. This may improve efficiency in communication system 10 when sharing web pages. For example, in certain embodiments, processing is split between web media servers 14, which may provide better scalability. In certain embodiments, peer-to-peer dynamic web page sharing may be possible. In certain embodiments, a standard signaling protocol may be used to provide signaling session 26 between web media servers 14. In certain embodiments, this allows one or more other devices or functions to be used that support the standard signaling protocol. For example, in certain embodiments, because a standard signaling protocol such as SIP is being used to provide peer-to-peer web page sharing, a single call may be placed using the standard signaling protocol, and multiple devices may be able to participate in the call, exchanging multiple types of media.

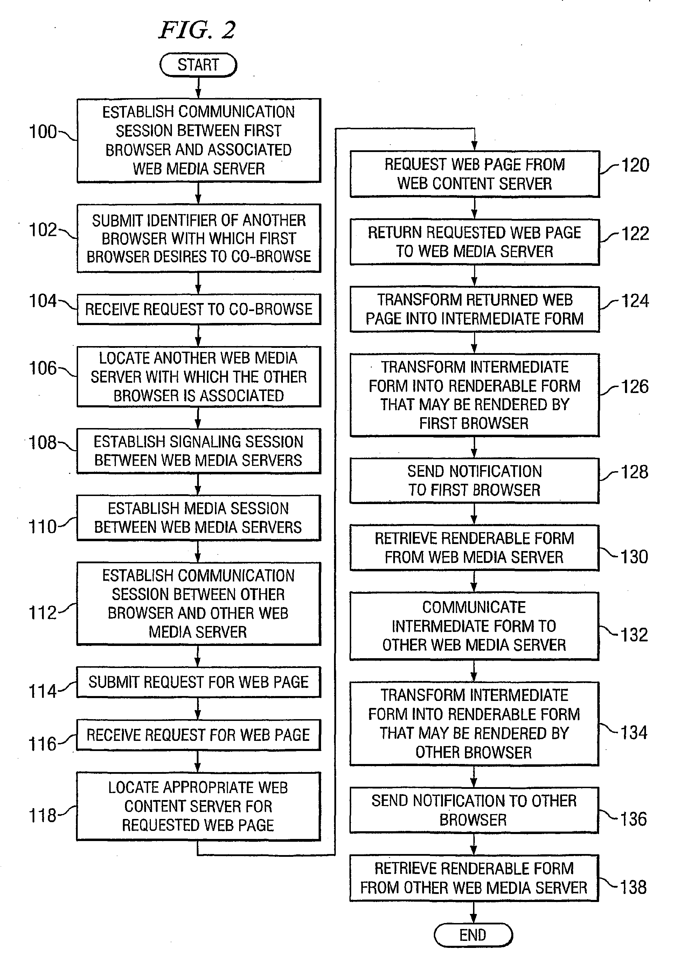

FIGURE 2 illustrates an example method for peer-to-peer dynamic web page sharing. At step 100, browser 12a establishes a communication session with its associated web media server 14a. This may include clicking on an icon on a desktop of browser 12a to initiate page sharing. However, in certain embodiments, browser 12a may be registered with web media server 14a without actually sharing web pages with another browser 12. In certain embodiments, the communication session between browser 12a and web media server 14a includes outgoing channel 30a and incoming channel 32a. Browser 14a may submit requests for web pages and other web content using outgoing channel 30a and web media server 14a may communicate notifications and other information to browser 14a using incoming channel 32a. At step 102, browser 12a submits to web media server 14a one or more names or other identifiers of other browsers 12 with which browser 12a desires to co-browse. For example, browser 12a may submit a request to co-browse with chachi@happydaycompany.com. For purposes of this description, it will be assumed that the browser 12 with which browser 12a desires to share is browser 12b; however, as discussed above, browser 12a may share with any suitable number of other browsers 12 according to particular needs.

At step 104, web media server 14a receives the request to co-browse with chachi@happydaycompany.com. At step 106, web media server 14a may locate another web media server 14b with which browser 12b is associated, possibly using the email address or other identifier provided by browser 12a. In an embodiment in which web media servers 14 are equipped to establish a communication session with other web media servers 14 using a standard signaling protocol (e.g., SIP), web media server 14a may locate web media server 14b using standard, pre-existing functionality, such as presence functionality or a SIP registrar/location function. At step 108, web media server 14a may establish signaling session 26 with web media server 14b. In one embodiment, signaling session 26 includes a SIP signaling session. At step 110, web media server 14a establishes media session 28 with web media server 14b. At step 112, a communication session is established between web media server 14b and browser 12b. In certain embodiments, the communication session between browser 12b and web media server 14b includes an outgoing channel 30b and an incoming channel 32b. Outgoing channel 30b may include an HTTP channel or any other suitable type of channel, and incoming channel 32b may include a LongPoll event channel or any other suitable type of channel. For example, browser 14b may submit requests for web pages and other web content using outgoing channel 30b and web media server 14b may communicate notifications and other information to browser 14b using incoming channel 32b.

At step 114, browser 12a may submit a request using outgoing channel 30a for a web page, for example by requesting a particular web site, to web media server 14a. The request for a web page may specify the web page to retrieve and display, as well as any other suitable information. For example, the request for the web page may include information that may be required to properly render the web page on browser 12a, such as session information, cookies, parameters to send to web content server 18, and any other suitable information. At step 116, via outgoing channel 30a or in any other suitable manner, web media server 14a may receive the request from browser 12a for the web page. In one embodiment, web media server 14a may retrieve any suitable information from browser 14a using a signed applet, plugin, or by other suitable means. Web media server 14a may derive any suitable information regarding browser 14a during a session with web content server 18.

At step 118, web media server 14a may locate the appropriate web content server 18 that includes the web page requested by browser 12a. For example, browser 12a may submit a web site address to web media server 14a, and web media server 14a may locate web content server 18 using the web site address. At step 120, web media server 14a may request from web content server 18 the web page requested by browser 12a. Web content server 18 may return a requested web page to web media server 14a at step 130. At step 132, web media server 14a may transform the returned web page into some intermediate form. In one embodiment, one or more links on the web page may be transformed into references and one or more links to images may also be transformed. The details of the transformation may depend on the syntax of the content being served. As merely an example, in an embodiment in which the retrieved web page includes HTML content, one transformation may need to be applied, while in the case of an IP phone display, another transformation may need to be applied.

At step 126, web media server 14a may transform the intermediate form of the retrieved web page into a renderable form that may be rendered by browser 12a. In one embodiment, each internal link in the renderable form may point back to a unique location on web media server 14a, not web content server 18. At step 128, web media server 14a may send a notification to browser 12a, using incoming channel 32a for example, indicating that the requested page has been retrieved. In one embodiment, incoming channel 32a includes a LongPoll event channel and web media server 14a sends a notification message using the LongPoll event channel to browser 12a. At step 130, browser 12a retrieves the renderable form of the web page from web media server 14a. In one embodiment, browser 12a may automatically, and without any input from a user associated with browser 12a, retrieve the renderable form from web media server 14a. However, the present invention contemplates browser 12a retrieving the renderable form from web media server 14a in any suitable manner.

At step 132, web media server 14a may communicate the intermediate form to web media server 14b. In one embodiment, web media server 14a communicates the intermediate form to web media server 14b using media session 28. At step 134, web media server 14b may transform the intermediate form of the retrieved web page into a renderable form that may be rendered by browser 12b. In one embodiment, the renderable form generated by web media server 14b and the renderable form generated by web media server 14a are different due, in part, to possible differences in browsers 12a and 12b. In one embodiment, each internal link in the renderable form may point back to a unique location on web media server 14b, not web content server 18. At step 136, web media server 14b may send a notification to browser 12b, using incoming channel 32b for example, indicating that the requested page has been retrieved. In one embodiment, incoming channel 32b includes a LongPoll event channel and web media server 14b sends a notification message using the LongPoll event channel to browser 12b. At step 138, browser 12b retrieves the renderable form of the web page from web media server 14b. In one embodiment, browser 12b automatically, and without any input from a user associated with browser 12b, retrieve the renderable form from web media server 14b. However, the present invention contemplates browser 12b retrieving the renderable form from web media server 14b in any suitable manner.

While the steps of the method are described as sequential, those skilled in the art will understand that in certain embodiments, these steps may be occurring substantially simultaneously or in different orders than shown during execution of the method. Moreover, browsers 12, web media servers 14, and web content server 18 may use methods with additional steps, fewer steps, and/or different steps, so long as the methods remain appropriate, and the steps of the methods may be repeated according to particular needs. For example, browser 12a and/or web media server 14a may disable one or more links in a web page before communicating the intermediate form to web media server 14b. Furthermore, certain steps of the method may occur substantially continuously, as long as a web page sharing session is ongoing between browser 12a and browser 12b. For example, browser 12a, browser 12b, or both may submit requests for new web pages, requests to alter currently displayed web pages, or perform any other suitable actions according to particular needs.

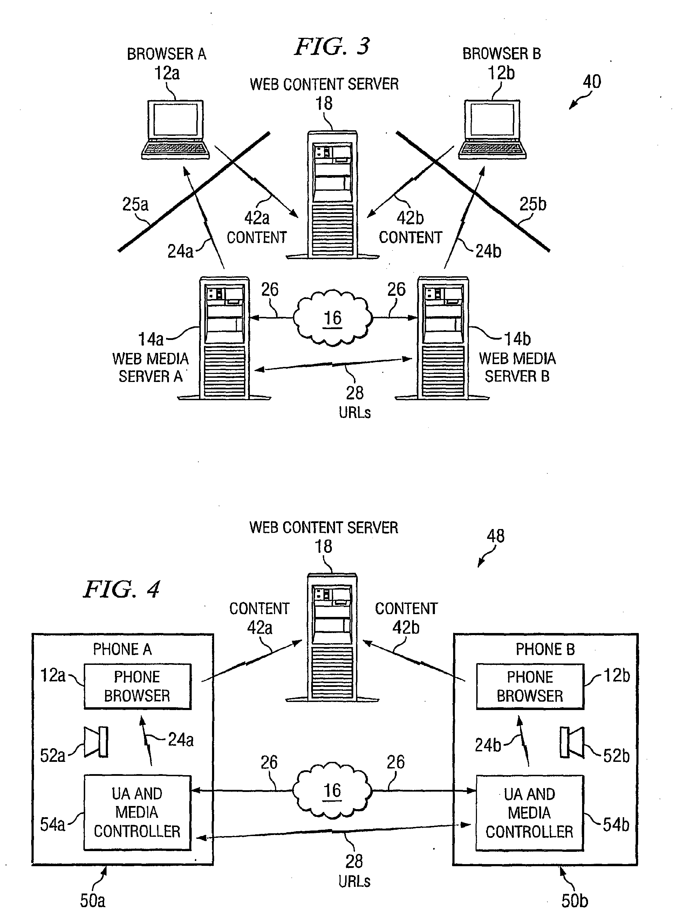

FIGURE 3 illustrates an example communication system 40 operable to provide peer-to-peer simple web page sharing. System 40 includes browsers 12, web media servers 14, and web content server 18. In certain embodiments, system 40 includes firewalls or other security measures 25. In operation of system 40, browser 12a may request a web page sharing session with one or more other browsers 12 (in this example, browser 12b) and may submit this request to web media server 14a. Web media server 14a may locate the web media server associated with browser 12b in a substantially similar manner to that described above with reference to FIGURES 1 and 2. In one embodiment in which web media servers 14 are SIP endpoints, web media server 14a may locate web media server 14b using presence functionality or a SIP registrar/location function of SIP network 16 such as SIP softswitch, for example. In one embodiment, web media servers 14 are already registered with SIP network 16. Web media server 14a may establish a signaling session 26 with web media server 14b using network 16. In an embodiment in which network 16 is a SIP network, signaling session 26 may be a SIP signaling session. In one embodiment, once web media servers 14 have found each other using network 16, the established signaling session 26 is a direct connection between web media servers 14.

Web media server 14a may also establish a media session 28 with web media server 14b using any suitable means. Media session 28 may allow web media servers 14 to communicate one or more types of media between each other. For example, media session 28 may allow web media servers 14 to communicate one or more URLs between each other. In one embodiment, media session 28 includes a direct connection between web media servers 14.

Browser 12a may submit a request to web content server 18 for one or more web pages using link 42a, for example. Links 42 may include an HTTP link or any other suitable type of link. The request may be submitted in any suitable format such as HTTP. Web content server 18 may return the requested web page to browser 12a. Browser 12a may communicate the URL or other suitable information regarding the requested web page to web media server 14a. Web media server 14a may communicate the URL and any other suitable information to web media server 14b, using media session 28 for example. Web media server 14b may communicate the URL and any other suitable information to browser 12b. Browser 12b may use the URL and any other suitable information to request from web content server 18 the web page that browser 12a requested.

FIGURE 4 illustrates an example communication system 48 operable to provide peer-to-peer web page sharing using at least two phones 50. Although phones 50 are described, any suitable device may be used in place of a phone 50, such as a computer or computer/phone combination for example. In one embodiment, phones 50 include SIP phones. Phones 50 may each include a browser 12, a speaker 52, and a user agent (UA) and media controller 54. The SIP term "user agent" refers to an endpoint such as phone 50a handling SIP call signaling and a particular media type (e.g., voice, data, web pages, etc.). In certain embodiments, UA and media controllers 54 may perform certain functions substantially similar to web media servers 14 described above. The UA portion of UA and web media servers 52 may allow phone 50 to handle both voice and web pages or other media. Although UA and media controllers 54 are illustrated as being packaged together, UA and media controllers 54 may be packaged separately a according to particular needs.

In operation, a user of phone 50a may make a telephone call to a user of phone 50b and may include in the phone call a request to share web pages. The request to share web pages may be made using UA and media controller 54a. For purposes of web page sharing, UA and media controller 54a may locate UA and media controller 54b in substantially the same manner as described above with reference to FIGURES 1, 2, and 3. For example, UA and media controllers 54 may use a standard signaling protocol such as SIP and may use one or more functions associated with the standard signaling protocol to locate each other.

In the illustrated embodiment, a user of phone 50a may request one or more web pages from web content server 18 using phone browser 12a and link 42. Link 42 may include an HTTP link or any other suitable type of link. Phone 50a may request the one or more web pages using the URL of the web pages for example. Browser 12a may communicate the URL and any other suitable information to UA and media controller 54a, which may communicate the URL and any other suitable information to UA and media controller 54b using media session 28. UA and media controller 54b may communicate a notification to phone browser 12b, using incoming channel 32b for example, and phone browser 12b may retrieve the URL from UA and media controller 54b. Phone browser 12b may use the URL to request the web page from web content server 18. In one embodiment, the users of browsers 12 may continue to engage in a voice session during the web page sharing session.

Although the illustrated embodiment depicts browsers 12 retrieving web pages from web content server 18, system 48 may be constructed such that UA and web media controller 54a is operable to retrieve web pages from web content server 18. In this example, web pages may be shared in a substantially similar manner to that described above with reference to FIGURES 1 and 2.

In one embodiment, UA and media controllers 54 may be packaged separately such that a user of phone 50a may also share web pages using an associated computer or other device. In this embodiment, voice media may be exchanged using phones 50 and web page media may be exchanged using the computers or other devices. This embodiment may be constructed using a composite controller, discussed in more detail in U.S. Patent Application No. 10/334,546 entitled "Composite Controller for Multimedia Sessions" and filed December 30, 2002 with the U.S. Patent and Trademark Office. In certain embodiments, because a standard signaling protocol such as SIP is being used to provide peer-to-peer web page sharing, a single call may be placed using the standard signaling protocol, and multiple devices may be able to participate in the call, exchanging multiple types of media. For example, this embodiment may allow an interactive voice response (IVR) session to include an interactive content response (ICR) session.

Although the present invention has been described in several embodiments, a myriad of changes and modifications may be suggested to one skilled in the art, and it is intended that the present invention encompass such changes and modifications as fall within the scope of the present appended claims.

## Claims

1. A communication system comprising:
a first browser (12a) operable to submit requests for one or more web pages and a request to share the one or more requested web pages with another browser (12b), the request to share specifying the other browser (12b); and
a web media server (14a) operable, in response to the request to share, to:
establish (100) a communication session with the first browser (12a);
establish (108, 110) a media session and a signaling session with a remote web media server (14b), the remote media server (14b) being associated with the other browser (12b) that the first browser (12a) specified in the request to share, the signaling session comprising a standard signaling protocol;
receive web page information from the first browser (12a); and
communicate shared web page information to the remote web media server (14b) using the media session;
wherein the first browser (12a), the other browser (12b) and the web media server (14a) are hosted on different computers.

2. The system of Claim 1, wherein the web page information and the shared web page information each comprise a uniform resource locator (URL) of the web page.

3. The system of Claim 2, wherein the first browser is operable to retrieve the requested web page from a web content server associated with the requested web page using the URL of the web page.

4. The system of Claim 2, wherein the web page information comprises a URL of the web page and the web media server is further operable to:
using the web page information, retrieve the requested web page from a web content server associated with the requested web page;
communicate a notification to the first browser indicating that the requested web page has been retrieved, the first browser further operable to request the retrieved web page in response to the notification; and
communicate the requested web page to the remote media server, the shared web page information comprising the requested web page.

5. The system of Claim 4, wherein the web media server is further operable to transform the requested web page retrieved from the web content server into an intermediate form by transforming one or more links of the retrieved web page into references, the shared web page information comprising the intermediate form.

6. The system of Claim 4, wherein the web media server is operable to, in response to the first browser's request for the retrieved web page in response to the notification, communicate a renderable form of the web page to the first browser, the renderable form comprising a form of the web page that is renderable by the first browser.

7. The system of Claim 1, wherein the shared web page information is sufficient to enable the remote web media server to generate a renderable form of the web page that is renderable by the other browser.

8. The system of Claim 1, wherein the web media server is operable to:
receive a new action request from the first browser, the new action request comprising a request to perform a new action;
perform the new action; and
provide a result to the first browser and new shared web page information to the remote web media server.

9. The system of Claim 8, wherein the new action request comprises a request for a new web page, the new action being retrieving the new web page, and the web media server is further operable to:
retrieve the new web page from the web content server; and
transform the requested new web page into a new intermediate form by transforming one or more links of the retrieved new web page into references, the new shared web page information comprising the new intermediate form.

10. The system of Claim 1, wherein the communication session between the first browser and the web media server comprises:
a first communication protocol for communication from the first browser to the web media server; and
a second communication protocol for communication from the web media server to the first browser.

11. The system of Claim 10, wherein:
the first communication protocol comprises hypertext transfer protocol (HTTP); and
the second communication protocol comprises a LongPoll event channel.

12. The system of Claim 1, wherein the standard signaling protocol comprises at least one of:
session initiation protocol (SIP);
media gateway control protocol (MGCP); and
H.323.

13. The system of Claim 1, wherein the media session uses a web media protocol comprising at least one of:
real-time transport protocol (RTP);
transport control protocol (TCP); and
user datagram protocol (UDP).

14. The system of Claim 1, wherein the web media server uses standard functionality provided by the signaling session of the standard signaling protocol to locate the remote web media server.

15. A method for peer-to-peer web page sharing, comprising:
submitting (114) requests for one or more web pages from a first browser (12a);
submitting (102), from the first browser (12a), a request to share the one or more requested web pages with another browser (12b), the request to share specifying the other browser (12b);
at a web media server (14a) :
establishing (100), in response to the request to share, a communication session between the web media server (14a) and the first browser (12a);
establishing (108, 110) a media session and a signaling session between the web media server (14a) and a remote web media server (14b), the remote web media server (14b) being associated with the other browser (12b) that the first browser (12a) specified in the request to share, the signaling session comprising a standard signaling protocol;
receiving web page information from the first browser (12a); and
communicating shared web page information to the remote web media server (14b) using the media session;
wherein the first browser is hosted on a first computer and the web media server is hosted on a second computer.

16. The method of Claim 15, wherein the web page information and the shared web page information each comprise a uniform resource locator (URL) of the web page.

17. The method of Claim 16, further comprising retrieving, using the first browser, the requested web page from a web content server associated with the requested web page using the URL of the web page.

18. The method of Claim 16, wherein the web page information comprises a URL of the web page, the method further comprising:
retrieving the requested web page from a web content server associated with the requested web page using the web page information;
communicating a notification to the first browser indicating that the requested web page has been retrieved, the first browser requesting the retrieved web page in response to the notification; and
communicating the requested web page to the remote media server, the shared web page information comprising the requested web page.

19. The method of Claim 18, further comprising transforming the requested web page retrieved from the web content server into an intermediate form by transforming one or more links of the retrieved web page into references, the shared web page information comprising the intermediate form.

20. The method of Claim 18, further comprising, in response to the first browser's request for the retrieved web page in response to the notification, communicating a renderable form of the web page to the first browser, the renderable form comprising a form of the web page that is renderable by the first browser.

21. The method of Claim 15, wherein the shared web page information is sufficient to enable the remote web media server to generate a renderable form of the web page that is renderable by the other browser.

22. The method of Claim 15, further comprising, at the web media server:
receiving a new action request from the first browser, the new action request comprising a request to perform a new action;
performing the new action; and
providing a result to the first browser and new shared web page information to the remote web media server.

23. The method of Claim 22, wherein the new action request comprises a request for a new web page, the new action being retrieving the new web page, the method comprising, at the web media server:
retrieving the new web page from the web content server; and
transforming the requested new web page into a new intermediate form by transforming one or more links of the retrieved new web page into references, the new shared web page information comprising the new intermediate form.

24. The method of Claim 15, wherein the communication session comprises:
a first communication protocol for communication from the first browser; and
a second communication protocol for communication to the first browser.

25. The method of Claim 24, wherein:
the first communication protocol comprises hypertext transfer protocol (HTTP); and
the second communication protocol comprises a LongPoll event channel.

26. The method of Claim 15, wherein the standard signaling protocol comprises at least one of:
session initiation protocol (SIP);
media gateway control protocol (MGCP); and
H.323.

27. The method of Claim 15, wherein the media session uses a web media protocol comprising at least one of:
real-time transport protocol (RTP);
transport control protocol (TCP); and
user datagram protocol (UDP).

28. The method of Claim 15, further comprising locating the remote web media server using standard functionality provided by the signaling session of the standard signaling protocol.

29. Logic embodied in a computer readable medium or a computer program or computer program product for performing a method according to any of claims 15 to 28.

## Patentansprüche

1. Kommunikationssystem, das Folgendes umfasst:
einen ersten Browser (12a), der Anforderungen für eine oder mehrere Webseiten und eine Anforderung zur gemeinsamen Nutzung der einen oder mehreren angeforderten Webseiten mit einem anderen Browser (12b) absenden kann, wobei die Anforderung zur gemeinsamen Nutzung den anderen Browser (12b) spezifiziert; und
einen Web-Medienserver (14a), der als Reaktion auf die Anforderung zur gemeinsamen Nutzung Folgendes ausführen kann:
Einrichten (100) einer Kommunikationssitzung mit dem ersten Browser (12a);
Einrichten (108, 110) einer Mediensitzung und einer Signalisierungssitzung mit einem entfernten Web-Medienserver (14b), wobei der entfernte Medienserver (14b) dem anderen Browser (12b) zugeordnet ist, den der erste Browser (12a) in der Anforderung zur gemeinsamen Nutzung spezifiziert hat, wobei die Signalisierungssitzung ein Standard-Signalisierungsprotokoll umfasst;
Empfangen von Webseiten-Informationen von dem ersten Browser (12a) und
Übermitteln von Informationen der gemeinsam genutzten Webseite an den entfernten Web-Medienserver (14b) mit Hilfe der Mediensitzung;
wobei der erste Browser (12a), der andere Browser (12b) und der Web-Medienserver (14a) auf verschiedenen Computern gehostet sind.

2. System nach Anspruch 1, wobei die Webseiten-Informationen und die Informationen der gemeinsam genutzten Webseite jeweils einen einheitlichen Ressourcenverweis (URL - Uniform Resource Locator) der Webseite umfassen.

3. System nach Anspruch 2, wobei der erste Browser die angeforderte Webseite von einem Web-Inhaltserver abrufen kann, der der angeforderten Webseite mit Hilfe der URL der Webseite zugeordnet ist.

4. System nach Anspruch 2, wobei die Webseiten-Informationen eine URL der Webseite umfassen und der Web-Medienserver ferner Folgendes ausführen kann:
Abrufen der angeforderten Webseite aus einem Web-Inhaltserver, der der angeforderten Webseite zugeordnet ist, mit Hilfe der Webseiten-Informationen;
Übermitteln einer Benachrichtigung an den ersten Browser, die anzeigt, dass die angeforderte Webseite abgerufen wurde, wobei der erste Browser ferner die abgerufene Webseite als Reaktion auf die Benachrichtigung anfordern kann; und
Übermitteln der angeforderten Webseite zu dem entfernten Medienserver, wobei die Informationen der gemeinsam genutzten Webseite die angeforderte Webseite umfassen.

5. System nach Anspruch 4, wobei der Web-Medienserver ferner die angeforderte Webseite, die von dem Web-Inhaltserver abgerufen wurde, in eine Zwischenform umwandeln kann, indem ein oder mehrere Links der abgerufenen Webseite in Referenzen umgewandelt werden, wobei die Informationen der gemeinsam genutzten Webseite die Zwischenform umfassen.

6. System nach Anspruch 4, wobei der Web-Medienserver als Reaktion auf die Anforderung des ersten Browsers nach der abgerufenen Webseite als Reaktion auf die Benachrichtigung eine darstellbare Form der Webseite an den ersten Browser übermitteln kann, wobei die darstellbare Form eine Form der Webseite umfasst, die mit Hilfe des ersten Browsers dargestellt werden kann.

7. System nach Anspruch 1, wobei die Informationen der gemeinsam genutzten Webseite ausreichen, um dem entfernten Web-Medienserver zu ermöglichen, eine darstellbare Form der Webseite zu erzeugen, die von dem anderen Browser dargestellt werden kann.

8. System nach Anspruch 1, wobei der Web-Medienserver Folgendes ausführen kann:
Empfangen einer Anforderung für eine neue Aktion von dem ersten Browser, wobei die Anforderung für eine neue Aktion eine Anforderung zur Durchführung einer neuen Aktion umfasst;
Durchführen der neuen Aktion; und
Bereitstellen eines Ergebnisses an den ersten Browser und neuer Informationen der gemeinsam genutzten Webseite an den entfernten Web-Medienserver.

9. System nach Anspruch 8, wobei die Anforderung für eine neue Aktion eine Anforderung für eine neue Webseite umfasst, wobei die neue Aktion im Abruf der neuen Webseite besteht und der Web-Medienserver ferner Folgendes ausführen kann:
Abrufen der neuen Webseite aus dem Web-Inhaltserver; und
Umwandeln der angeforderten neuen Webseite in eine neue Zwischenform, indem ein oder mehrere Links der abgerufenen neuen Webseite in Referenzen umgewandelt werden, wobei die neuen Informationen der gemeinsam genutzten Webseite die neue Zwischenform umfassen.

10. System nach Anspruch 1, wobei die
Kommunikationssitzung zwischen dem ersten Browser und dem Web-Medienserver Folgendes umfasst:
ein erstes Kommunikationsprotokoll für die Kommunikation von dem ersten Browser zu dem Web-Medienserver und
ein zweites Kommunikationsprotokoll für die Kommunikation von dem Web-Medienserver zu dem ersten Browser.

11. System nach Anspruch 10, wobei:
das erste Kommunikationsprotokoll das Hypertext Transfer Protocol (HTTP) umfasst und
das zweite Kommunikationsprotokoll einen LongPoll Ereigniskanal umfasst.

12. System nach Anspruch 1, wobei das
Standardsignalisierungsprotokoll mindestens eines von Folgendem umfasst:
Session Initiation Protocol (SIP),
Media Gateway Control Protocol (MGCP) und
H.323.

13. System nach Anspruch 1, wobei die Mediensitzung ein Web-Medienprotokoll verwendet, das mindestens eines von Folgendem umfasst:
Real-Time Transport Protocol (RTP),
Transport Control Protocol (TCP) und
User Datagram Protocol (UDP).

14. System nach Anspruch 1, wobei der Web-Medienserver Standardfunktionalität verwendet, die durch die Signalisierungssitzung des Standardsignalisierungsprotokolls bereitgestellt wird, um den entfernten Web-Medienserver zu lokalisieren.

15. Verfahren zur gemeinsamen Nutzung von Peer-to-Peer-Webseiten, das Folgendes umfasst:
Absenden (114) von Anforderungen für eine oder mehrere Webseiten von einem ersten Browser (12a);
von dem ersten Browser (12a) Absenden (102) einer Anforderung zur gemeinsamen Nutzung der einen oder mehreren angeforderten Webseiten mit einem anderen Browser (12b), wobei die Anforderung zur gemeinsamen Nutzung den anderen Browser (12b) spezifiziert;
bei einem Web-Medienserver (14a):
als Reaktion auf die Anforderung zur gemeinsamen Nutzung Einrichten (100) einer Kommunikationssitzung zwischen dem Web-Medienserver (14a) und dem ersten Browser (12a);
Einrichten (108, 110) einer Mediensitzung und einer Signalisierungssitzung zwischen dem Web-Medienserver (14a) und einem entfernten Web-Medienserver (14b), wobei der entfernte Web-Medienserver (14b) dem anderen Browser (12b) zugeordnet ist, den der erste Browser (12a) in der Anforderung zur gemeinsamen Nutzung spezifiziert hat, wobei die Signalisierungssitzung ein Standard-Signalisierungsprotokoll umfasst;
Empfangen von Webseiten-Informationen von dem ersten Browser (12a) und
Übermitteln von Informationen der gemeinsam genutzten Webseite an den entfernten Web-Medienserver (14b) mit Hilfe der Mediensitzung;
wobei der erste Browser auf einem ersten Computer gehostet ist und der Web-Medienserver auf einem zweiten Computer gehostet ist.

16. Verfahren nach Anspruch 15, wobei die Webseiten-Informationen und die Informationen der gemeinsam genutzten Webseite jeweils einen einheitlichen Ressourcenverweis (URL - Uniform Resource Locator) der Webseite umfassen.

17. Verfahren nach Anspruch 16, das unter Verwendung des ersten Browsers ferner das Abrufen der angeforderten Webseite mit Hilfe der URL der Webseite aus einem Web-Inhaltserver umfasst, der der angeforderten Webseite zugeordnet ist.

18. Verfahren nach Anspruch 16, wobei die Webseiten-Informationen eine URL der Webseite umfassen und das Verfahren ferner Folgendes umfasst:
Abrufen der angeforderten Webseite mit Hilfe der Webseiten-Informationen von einem Web-Inhaltserver, der der angeforderten Webseite zugeordnet ist;
Übermitteln einer Benachrichtigung an den ersten Browser, die anzeigt, dass die angeforderte Webseite abgerufen wurde, wobei der erste Browser ferner die abgerufene Webseite als Reaktion auf die Benachrichtigung anfordert; und
Übermitteln der angeforderten Webseite zu dem entfernten Medienserver, wobei die Informationen der gemeinsam genutzten Webseite die angeforderte Webseite umfassen.

19. Verfahren nach Anspruch 18, das ferner die Umwandlung der angeforderten Webseite, die aus dem Web-Inhaltserver abgerufen wurde, in eine Zwischenform umfasst, indem ein oder mehrere Links der abgerufenen Webseite in Referenzen umgewandelt werden, wobei die Informationen der gemeinsam genutzten Webseite die Zwischenform umfassen.

20. Verfahren nach Anspruch 18, das ferner als Reaktion auf die Anforderung des ersten Browsers nach der abgerufenen Webseite als Reaktion auf die Benachrichtigung die Übermittlung einer darstellbaren Form der Webseite an den ersten Browser umfasst, wobei die darstellbare Form eine Form der Webseite umfasst, die mit Hilfe des ersten Browsers dargestellt werden kann.

21. Verfahren nach Anspruch 15, wobei die Informationen der gemeinsam genutzten Webseite ausreichen, um dem entfernten Web-Medienserver zu ermöglichen, eine darstellbare Form der Webseite zu erzeugen, die von dem anderen Browser dargestellt werden kann.

22. Verfahren nach Anspruch 15, das ferner bei dem Web-Medienserver Folgendes umfasst:
Empfangen einer Anforderung für eine neue Aktion von dem ersten Browser, wobei die Anforderung für eine neue Aktion eine Anforderung zur Durchführung einer neuen Aktion umfasst;
Durchführen der neuen Aktion; und
Bereitstellen eines Ergebnisses an den ersten Browser und neuer Informationen der gemeinsam genutzten Webseite an den entfernten Web-Medienserver.

23. Verfahren nach Anspruch 22, wobei die Anforderung für eine neue Aktion eine Anforderung für eine neue Webseite umfasst, wobei die neue Aktion im Abruf der neuen Webseite besteht, wobei das Verfahren bei dem Web-Medienserver Folgendes umfasst:
Abrufen der neuen Webseite aus dem Web-Inhaltserver; und
Umwandeln der angeforderten neuen Webseite in eine neue Zwischenform, indem ein oder mehrere Links der abgerufenen neuen Webseite in Referenzen umgewandelt werden, wobei die neuen Informationen der gemeinsam genutzten Webseite die neue Zwischenform umfassen.

24. Verfahren nach Anspruch 15, wobei die Kommunikationssitzung Folgendes umfasst:
ein erstes Kommunikationsprotokoll für die Kommunikation von dem ersten Browser und
ein zweites Kommunikationsprotokoll für die Kommunikation zu dem ersten Browser.

25. Verfahren nach Anspruch 24, wobei:
das erste Kommunikationsprotokoll das Hypertext Transfer Protocol (HTTP) umfasst und
das zweite Kommunikationsprotokoll einen LongPoll Ereigniskanal umfasst.

26. Verfahren nach Anspruch 15, wobei das Standardsignalisierungsprotokoll mindestens eines von Folgendem umfasst:
Session Initiation Protocol (SIP),
Media Gateway Control Protocol (MGCP) und
H.323.

27. Verfahren nach Anspruch 15, wobei die Mediensitzung ein Web-Medienprotokoll verwendet, das mindestens eines von Folgendem umfasst:
Real-Time Transport Protocol (RTP),
Transport Control Protocol (TCP) und
User Datagram Protocol (UDP).

28. Verfahren nach Anspruch 15, das ferner die Lokalisierung des entfernten Web-Medienservers mit Hilfe einer Standard-Funktionalität umfasst, die durch die Signalisierungssitzung des Standardsignalisierungsprotokolls bereitgestellt wird.

29. Logik, die in einem computerlesbaren Medium oder einem Computerprogramm oder Computerprogrammprodukt zum Durchführen eines Verfahrens nach einem der Ansprüche 15 bis 28 enthalten ist.

## Revendications

1. Système de communication comprenant :
un premier navigateur (12a) exploitable de façon à soumettre des demandes pour une ou plusieurs pages web, et une demande pour partager ladite une ou plusieurs pages web demandées avec un autre navigateur (12b), la demande de partage spécifiant l'autre navigateur (12b) ; et
un serveur de médias web (14a) exploitable, en réaction à la demande de partage, de façon à :
établir (100) une session de communication avec le premier navigateur (12a) ;
établir (108, 110) une session de médias et une session de signalisation avec un serveur distant de médias web (14b), le serveur distant de médias (14b) étant associé à l'autre navigateur (12b) que le premier navigateur (12a) a spécifié dans la demande de partage, la session de signalisation comprenant un protocole de signalisation standard ;
recevoir des informations de pages web en provenance du premier navigateur (12a) ; et
communiquer des informations de pages web partagées au serveur distant de médias web (14b) grâce à l'utilisation de la session de médias ;
cas dans lequel le premier navigateur (12a), l'autre navigateur (12b) et le serveur de médias web (14a) sont hébergés sur différents ordinateurs.

2. Système selon la revendication 1, les informations de pages web et les informations de pages web partagées comportant, chacune, un identificateur universel de ressources (URL) de la page web.

3. Système selon la revendication 2, le premier navigateur étant exploitable de façon à récupérer la page web demandée à partir d'un serveur de contenus web associé à la page web demandée grâce à l'utilisation de l'URL de la page web.

4. Système selon la revendication 2, les informations de pages web comprenant un URL de la page web, et le serveur de médias web étant exploitable en outre de façon à :
grâce à l'utilisation des informations de pages web, récupérer la page web demandée à partir d'un serveur de contenus web qui est associé à la page web demandée ;
communiquer une notification au premier navigateur laquelle indique que la page web demandée a été récupérée, le premier navigateur étant exploitable en outre de façon à demander la page web récupérée en réaction à la notification ; et
communiquer la page web demandée au serveur distant de médias, les informations de pages web partagées englobant la page web demandée.

5. Système selon la revendication 4, le serveur de médias web étant exploitable en outre de façon à transformer la page web demandée, ayant été récupérée à partir du serveur de contenus web, en une forme intermédiaire, en transformant en références un ou plusieurs liens de la page web récupérée, alors que les informations de la page web partagée englobent la forme intermédiaire.

6. Système selon la revendication 4, le serveur de médias web étant exploitable, en réaction à la demande du premier navigateur pour la page web récupérée en réaction à la notification, de façon à communiquer une forme restituable de la page web au premier navigateur, la forme restituable englobant une forme de la page web qui est restituable par le premier navigateur.

7. Système selon la revendication 1, les informations de la page web partagée étant suffisantes pour permettre au serveur distant de médias web de générer une forme restituable de la page web qui est restituable par l'autre navigateur.

8. Système selon la revendication 1, le serveur de médias web étant exploitable de façon à :
recevoir une demande relative à une nouvelle action en provenance du premier navigateur, la demande relative à une nouvelle action comportant une demande pour effectuer une nouvelle action ;
effectuer la nouvelle action ; et
fournir un résultat au premier navigateur et de nouvelles informations de pages web partagées au serveur distant de médias web.

9. Système selon la revendication 8, la demande relative à une nouvelle action comprenant une demande pour une nouvelle page web, la nouvelle action étant de récupérer la nouvelle page web, et le serveur de médias web étant exploitable en outre de façon à :
récupérer la nouvelle page web à partir du serveur de contenus web ; et
transformer la nouvelle page web demandée en une nouvelle forme intermédiaire en transformant en références un ou plusieurs liens de la nouvelle page web récupérée, alors que les nouvelles informations de la page web partagée englobent la nouvelle forme intermédiaire.

10. Système selon la revendication 1, la session de communication entre le premier navigateur et le serveur de médias web comprenant :
un premier protocole de communication pour assurer les communications provenant du premier navigateur et se rendant au serveur de médias web ; et
un deuxième protocole de communication pour assurer les communications provenant du serveur de médias web et se rendant au premier navigateur.

11. Système selon la revendication 10 :
le premier protocole de communication comprenant le protocole de transfert hypertexte (HTTP) ; et
le deuxième protocole de communication comprenant un canal d'événements « LongPoll ».

12. Système selon la revendication 1, le protocole de signalisation standard comprenant au moins l'un des protocoles suivants, à savoir :
le protocole d'ouverture de session (SIP) ;
le protocole de contrôle de passerelle de médias (MGCP) ; et
H.323.

13. Système selon la revendication 1, la session de médias utilisant un protocole de médias web lequel comporte au moins l'un des protocoles suivants, à savoir ;
le protocole de transmission en temps réel (RTP) ;
le protocole de contrôle de transmission (TCP) ; et
le protocole de datagramme Utilisateur (UDP).

14. Système selon la revendication 1, le serveur de médias web utilisant une fonctionnalité standard procurée par la session de signalisation du protocole de signalisation standard afin de localiser le serveur distant de médias web.

15. Procédé servant à partager des pages web de pair à pair, comprenant les opérations consistant à :
soumettre (114) des demandes pour un ou plusieurs pages web à partir d'un premier navigateur (12a) ;
soumettre (102), à partir du premier navigateur (12a), une demande pour partager ladite une ou plusieurs pages web demandées avec un autre navigateur (12b), la demande de partage spécifiant l'autre navigateur (12b) ;
au niveau d'un serveur de médias web (14a) :
établir (100), en réaction à la demande de partage, une session de communication entre le serveur de médias web (14a) et le premier navigateur (12a) ;
établir (108, 110) une session de médias et une session de signalisation entre le serveur de médias web (14a) et un serveur distant de médias web (14b), le serveur distant de médias web (14b) étant associé à l'autre navigateur (12b) que le premier navigateur (12a) a spécifié dans la demande de partage, la session de signalisation comprenant un protocole de signalisation standard ;
recevoir des informations de pages web en provenance du premier navigateur (12a) ; et
communiquer des informations de pages web partagées au serveur distant de médias web (14b) grâce à l'utilisation de la session de médias ;
cas dans lequel le premier navigateur est hébergé sur un premier ordinateur, et le serveur de médias web est hébergé sur un deuxième ordinateur.

16. Procédé selon la revendication 15, les informations de pages web et les informations de pages web partagées comportant, chacune, un identificateur universel de ressources (URL) de la page web.

17. Procédé selon la revendication 16, comprenant en outre l'opération consistant à récupérer la page web demandée, grâce à l'utilisation du premier navigateur, à partir d'un serveur de contenus web associé à la page web demandée en utilisant l'URL de la page web.

18. Procédé selon la revendication 16, les informations de pages web comprenant un URL de la page web, le procédé comprenant en outre les opérations consistant à :
récupérer la page web demandée à partir d'un serveur de contenus web associé à la page web demandée, grâce à l'utilisation des informations de pages web ;
communiquer une notification au premier navigateur laquelle indique que la page web demandée a été récupérée, le premier navigateur demandant la page web récupérée en réaction à la notification ; et
communiquer la page web demandée au serveur distant de médias, les informations de pages web partagées englobant la page web demandée.

19. Procédé selon la revendication 18, comprenant en outre l'opération consistant à transformer la page web demandée, ayant été récupérée à partir du serveur de contenus web, en une forme intermédiaire, en transformant en références un ou plusieurs liens de la page web récupérée, alors que les informations de la page web partagée englobent la forme intermédiaire.

20. Procédé selon la revendication 18, comprenant en outre, en réaction à la demande du premier navigateur pour la page web récupérée en réaction à la notification, l'opération consistant à communiquer une forme restituable de la page web au premier navigateur, la forme restituable englobant une forme de la page web qui est restituable par le premier navigateur.

21. Procédé selon la revendication 15, les informations de la page web partagée étant suffisantes pour permettre au serveur distant de médias web de générer une forme restituable de la page web qui est restituable par l'autre navigateur.

22. Procédé selon la revendication 15, comprenant en outre, au niveau du serveur de médias web, les opérations consistant à :
recevoir une demande relative à une nouvelle action en provenance du premier navigateur, la demande relative à une nouvelle action comportant une demande pour effectuer une nouvelle action ;
effectuer la nouvelle action ; et
fournir un résultat au premier navigateur et de nouvelles informations de pages web partagées au serveur distant de médias web.

23. Procédé selon la revendication 22, la demande relative à une nouvelle action comprenant une demande pour une nouvelle page web, la nouvelle action étant de récupérer la nouvelle page web, le procédé comprenant, au niveau du serveur de médias web, les opérations consistant à :
récupérer la nouvelle page web à partir du serveur de contenus web ; et
transformer la nouvelle page web demandée en une nouvelle forme intermédiaire en transformant en références un ou plusieurs liens de la nouvelle page web récupérée, alors que les nouvelles informations de la page web partagée englobent la nouvelle forme intermédiaire.

24. Procédé selon la revendication 15, la session de communication comprenant :
un premier protocole de communication pour assurer les communications provenant du premier navigateur ; et
un deuxième protocole de communication pour assurer les communications se rendant au premier navigateur.

25. Procédé selon la revendication 24 :
le premier protocole de communication comprenant le protocole de transfert hypertexte (HTTP) ; et
le deuxième protocole de communication comprenant un canal d'événements « LongPoll ».

26. Procédé selon la revendication 15, le protocole de signalisation standard comprenant au moins l'un des protocoles suivants, à savoir :
le protocole d'ouverture de session (SIP) ;
le protocole de contrôle de passerelle de médias (MGCP) ; et
H.323.

27. Procédé selon la revendication 15, la session de médias utilisant un protocole de médias web lequel comporte au moins l'un des protocoles suivants, à savoir ;
le protocole de transmission en temps réel (RTP) ;
le protocole de contrôle de transmission (TCP) ; et
le protocole de datagramme Utilisateur (UDP).

28. Procédé selon la revendication 15, comprenant en outre l'opération consistant à localiser le serveur distant de médias web grâce à l'utilisation d'une fonctionnalité standard procurée par la session de signalisation du protocole de signalisation standard.

29. Logique intégrée dans un support lisible par ordinateur ou un programme informatique ou un produit à programme informatique pour réaliser un procédé selon l'une quelconque des revendications 15 à 28.
